# EUROPEAN PATENT APPLICATION

(11) **EP 2 940 769 A1**
(43) Date of publication of application: **04.11.2015**
(21) Application number: 13866997.3
(22) Date of filing: 14.08.2013
(51) Int. Cl.: H01M 8/04, H01M 8/14

(54) **FUEL CELL SYSTEM**

(30) Priority: 28.12.2012 KR 20120155700
(71) Applicant: Posco Energy Co. Ltd., Seoul 135-777 (KR)
(72) Inventor: KIM, Seon Hwa, Seoul 121-210 (KR)
(74) Representative: Patentanwälte Ruff, Wilhelm, Beier, Dauster & Partner mbB
(86) International application number: PCT/KR2013/007324
(87) International publication number: WO 2014/104525

(57) **Abstract**

A power generation system which is a fuel cell system including a preheating device that preheats a fuel, a preliminary reforming device that reforms the preheated fuel, a fuel cell stack module in which the reformed fuel reacts to generate electric power, and a circulating device that selectively supplies a product generated in the fuel cell stack module to the preheating device.

## Description

### TECHNICAL FIELD

The inventive concept relates to a power generation system, and more particularly, to a power generation system configured as a fuel cell system including a preheating device that preheats a fuel, a preliminary reforming device that reforms the preheated fuel, a fuel cell stack module in which the reformed fuel reacts to generate electric power, and a circulating device that selectively supplies a product generated in the fuel cell stack module to the preheating device.

### BACKGROUND ART

A fuel cell is a device that converts chemical energy stored in a hydrocarbon fuel into electric energy through an electrochemical reaction. In general, a fuel cell includes an anode and a cathode separated by an electrolyte that conducts an electric current to electrically charged ions. A molten carbonate fuel cell operates as a reactant fuel gas passes through the anode, while a gas containing carbon dioxide is oxidized, and oxygen passes through the cathode.

In general, a fuel gas supplied to the fuel cell undergoes a reforming process before the fuel gas is supplied to a fuel cell stack that includes an anode, a cathode, and an electrolyte, so that the fuel gas may appropriately react in the fuel cell stack. For the reforming process, a reforming device is prepared to perform reforming such as humidification or preheating.

Appropriately reforming of the fuel gas is closely related to the efficiency of the fuel cell. Thus, although various techniques have been suggested to maintain and control an appropriate reforming atmosphere, a reformed state of the fuel gas cannot be flexibly controlled.

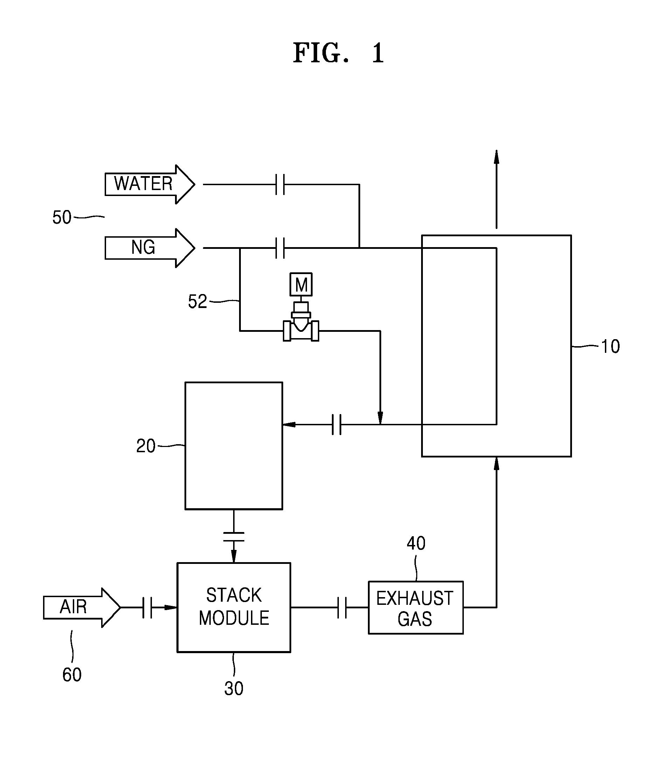

For example, as illustrated in FIG. 1, in a fuel cell system according to the related art, a fuel is preheated by a preheating device 10 and supplied to a fuel cell stack module 30 via a preliminary reforming device 20, and a product generated while electric power is generated in the fuel cell stack module 30 is used as a heat source by a circulating device 40. In this case, in order to control a preheating atmosphere in the preheating device 10, the fuel supply line 50 includes a bypass line 52 for controlling the flow rate of the fuel passing through the preheating device 10 and an air supply line 60 is additionally installed to supply air to the fuel cell stack module 30.

The fuel cell system according to the related art controls a state of the fuel by controlling the flow rate of the fuel, but cannot flexibly respond to the state change of the fuel.

### DETAILED DESCRIPTION OF THE INVENTIVE CONCEPT TECHNICAL PROBLEM

The inventive concept provides a power generation system which is a fuel cell system including a preheating device that preheats a fuel, a preliminary reforming device that reforms the preheated fuel, a fuel cell stack module in which the reformed fuel reacts to generate electric power, and a circulating device that selectively supplies a product generated in the fuel cell stack module to the preheating device.

### TECHNICAL SOLUTION

According to an aspect of the inventive concept, a power generation system includes a preheating device for preheating a fuel; a preliminary reforming device for reforming the preheated fuel; a fuel cell stack module in which the reformed fuel reacts to generate electric power; and a circulating device for selectively providing a product generated in the fuel cell stack module to the preheating device.

The circulating device may include a heating line for supplying the product to the preheating device; and a bypass line for diverting the product with respect to the preheating device.

The bypass line may include a flow meter for controlling a flow rate; and a damper unit.

The bypass line may include a heat exchanger.

The fuel cell system may further include a control device, and the control device may control the damper unit according to a state of a supplied fuel.

The fuel cell system may further include a supply device, and the supply device may include a first supply line for supplying a fuel and water to the fuel cell stack module via the preheating device and the preliminary reforming device; and a second supply line for supplying air to the fuel cell stack module.

The fuel cell stack module may include an anode; a cathode; and an electrolyte present between the anode and the cathode.

### ADVANTAGEOUS EFFECTS

A fuel cell system according to an embodiment of the inventive concept includes a circulating device, and the circulating device is configured to selectively supply a product generated in a fuel cell stack module to a preheating device. The product generated in the fuel cell stack module through an electrochemical reaction has high-temperature heat energy. Thus, the heat energy of the product may be used as heat energy for the preheating device by the circulating device. Accordingly, an overall energy utilization efficiency of the fuel cell system may be increased.

Since the circulating device includes a heating line and a bypass line, the flow rate of a product such as an exhaust gas supplied to the preheating device may be controlled. Thus, a preheating atmosphere in the preheating device may be controlled to flexibly control a state of a fuel. That is, a fuel that is in an appropriate state may be supplied by flexibly responding to the state of the fuel supplied to the preliminary reforming device.

The bypass line includes a heat exchanger. Heat of the product passing through the bypass line may be exchanged with external heat via the heat exchanger. By installing the heat exchanger, heat energy of the product that is not used for preheating and is thus discharged via the bypass line may be effectively used. Accordingly, the energy utilization efficiency of the fuel cell system may be greatly improved.

### DESCRIPTION OF THE DRAWINGS

FIG. 1 is a conceptual diagram of a power generation system according to the related art; and
FIG. 2 is a circuit diagram of a power generation system according to an embodiment of the inventive concept.

### BEST MODE

A power generation system according to an embodiment of the inventive concept is a fuel cell system including a preheating device that preheats a fuel, a preliminary reforming device that reforms the preheated fuel, a fuel cell stack module in which the reformed fuel reacts to generate electric power, and a circulating device that selectively supplies a product generated in the fuel cell stack module to the preheating device.

### MODE OF THE INVENTIVE CONCEPT

Hereinafter, exemplary embodiments of the inventive concept will be described with reference to the accompanying drawings. The inventive concept is not, however, limited by these exemplary embodiments.

The advantages and features of the inventive concept and methods of achieving them will become apparent and more readily appreciated from the following description of the exemplary embodiments, taken in conjunction with the accompanying drawings. The inventive concept may, however, be embodied in many different forms and should not be construed as being limited to the embodiments set forth herein. Rather, these embodiments are provided so that this disclosure will be thorough and complete and will fully convey the concept of the inventive concept to those of ordinary skill in the art. The scope of the inventive concept is defined in the claims and their equivalents. The same reference numerals represent the same elements throughout the detailed description.

The terminology used herein is for the purpose of describing particular embodiments only and is not intended to be limiting of the inventive concept. As used herein, the singular forms "a", "an" and "the" are intended to include the plural forms as well, unless the context clearly indicates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which the inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

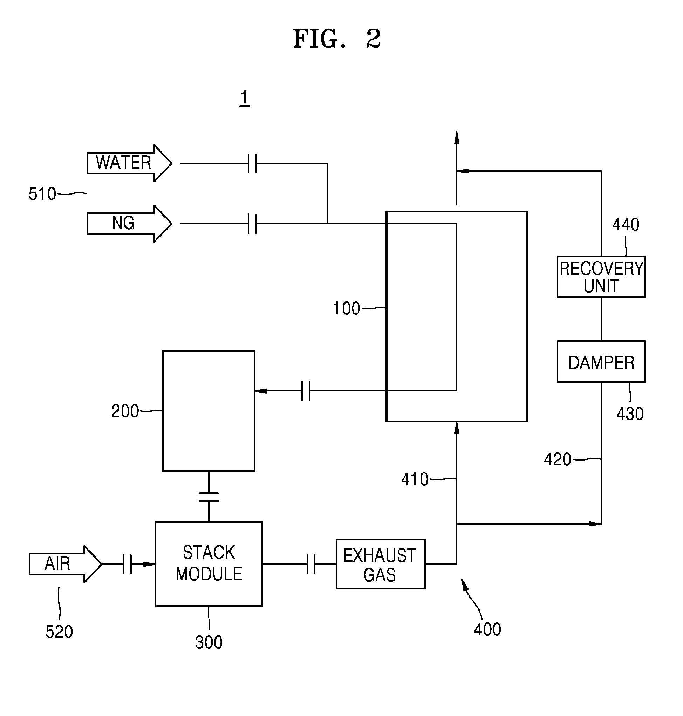

FIG. 2 is a circuit diagram of the power generation system 1 according to an embodiment of the inventive concept.

The fuel cell system 1 according to an embodiment of the inventive concept may include a preheating device 100 that preheats a fuel, a preliminary reforming device 200 that reforms the preheated fuel, a fuel cell stack module 300 in which the reformed fuel reacts to generate electric power, and a circulating device 400 that selectively supplies a product generated in the fuel cell stack module 300 to the preheating device 100.

A supplied fuel is preheated in the preheating device 100. The fuel may include hydrocarbon and water and remain in an appropriate state to react when preheated. The preheating device 100 may be a humidifier and may heat the water included in the fuel to change into a vapor state.

The preliminary reforming device 200 may reform the fuel into a hydrogen-rich reforming gas. The preliminary reforming device 200 may include an additional heat source such as a burner but is not limited thereto.

Although FIG. 2 illustrates that the preheating device 100 and the preliminary reforming device 200 are separate units, embodiments of the inventive concept are not limited thereto and the preheating device 100 and the preliminary reforming device 200 may be unified as one device.

The fuel reformed while passing through the preliminary reforming device 200 is supplied to the fuel cell stack module 300. Electric power is generated in the fuel cell stack module 300 as an electrochemical reaction occurs between the reformed fuel and an oxidizer. For example, the fuel cell stack module 300 may have a structure in which a plurality of unit cells are stacked, and one of the plurality of unit cells may include a membrane-electrode assembly (MEA) and a pair of separators disposed at both ends of the MEA.

The MEA may include an electrolyte membrane, an anode on one surface of the electrolyte membrane, and a cathode on a surface opposite the surface of the electrolyte membrane. The pair of separators may include an anode separator that faces the anode and supplies the reforming gas to the anode, and a cathode separator that faces the cathode and supplies the oxidizer to the cathode.

In the anode, an oxidization reaction occurs to separate electrons and hydrogen ions from hydrogen included in the fuel. In the cathode, a reduction reaction occurs to separate electrons and oxygen ions from oxygen included in the oxidizer. The electrolyte membrane has an ion exchange function of moving the hydrogen ions from the anode to the cathode. In the MEA, electric energy is generated through an electrochemical reaction between hydrogen and oxygen, and water is generated as a byproduct of this reaction.

The circulating device 400 may discharge a product, which is generated due to the electrochemical reaction occurring in the fuel cell stack module 300, to the outside or circulate the product. Here, the product may include water. The circulating device 400 may have a pipe structure to guide the product.

The circulating device 400 is configured to selectively supply a product generated in the fuel cell stack module 300 to the preheating device 100. The product generated through the electrochemical reaction occurring in the fuel cell stack module 300 has high-temperature heat energy, and thus the heat energy of the product may be used as heat energy for the preheating device 100. Thus, an overall energy utilization efficiency of the fuel cell system 1 according to an embodiment of the inventive concept may be improved.

Also, the circulating device 400 may be configured to selectively supply the product generated in the fuel cell stack module 300 to the preheating device 100, so that a preheating atmosphere and conditions may be controlled according to a state of the fuel supplied to the fuel cell stack module 300. Here, the selectively supplying of the product means that a supply rate of the product, elements of the product, etc. may be selected and should be thus understood as a concept of ensuring that the preheating device 100 operates under an appropriate atmosphere by selecting the supply rate of the product, elements of the product, etc. That is, the circulating device 400 may supply a large amount of the product to the preheating device 100 when the fuel needs to be heated to a high temperature, and supply a relatively small amount of the product to the preheating device 100 when the fuel need not be heated to a high temperature.

The circulating device 400 may include a heating line 410 for supplying the product to the preheating device 100, and a bypass line 420 for diverting the product with respect to the preheating device 100.

The heating line 410 is connected such that the product generated in the fuel cell stack module 300 is supplied to the preheating device 100. The bypass line 420 is connected such that the product is diverted with respect to the preheating device 100 not to be supplied to the preheating device 100. The heating line 410 and the bypass line 420 may be included in the circulating device 400, and configured as a plurality of branches extending from one line.

That is, the circulating device 400 includes the heating line 410 for supplying the product to the preheating device 100 and the bypass line 420 for diverting the product with respect to the preheating device 100, and may thus control the amount of the product to be supplied to the preheating device 100, thereby controlling a preheating atmosphere in the preheating device 100. For example, a preheating temperature of the preheating device 100 may increase when the amount of the product to be supplied to the preheating device 100 via the heating line 410 increases, and may decrease when a large amount of the product passes through the bypass line 420.

Thus, an adjusting device such as a valve may be installed to control the amount of the product passing through the bypass line 420. For example, according to an embodiment of the inventive concept, the bypass line 420 may include a flow meter (not shown) and a damper unit 430 to control the flow rate of the product. The damper unit 430 may be configured to control the flow rate of the product passing through the bypass line 420.

As described above, the circulating device 400 includes the heating line 410 and the bypass line 420 and may thus control the flow rate of the product (such as an exhaust gas) to be supplied to the preheating device 100. Thus, a preheating atmosphere (e.g., humidity, temperature, etc.) in the preheating device 100 may be controlled to flexibly control a state of a fuel. That is, a fuel that is in an appropriate state may be supplied by flexibly responding to the state of the fuel to be supplied to the preliminary reforming device 200.

According to an embodiment of the inventive concept, the bypass line 420 may include a heat exchanger 440.

A product supplied via the heating line 410 is used as a heating source of the preheating device 100 but a product passing through the bypass line 420 is not used as a heating source of the preheating device 100. Thus, the bypass line 420 may include a heat exchanger 440 to use heat energy of the product passing through the bypass line 420. Heat of the product passing through the bypass line 420 may be exchanged with external heat through the heat exchanger 440. For example, the heat exchanger 440 may have a pipe structure to perform heat exchanging. For example, the heat exchanger 440 may connect the bypass line 420 to a predetermined pipe, and the predetermined pipe may be connected to a heating device so as to use the heat energy of the product passing through the bypass line 420, but embodiments of the inventive concept are not limited thereto. By installing the heat exchanger 440, the heat energy of the product that is not used for preheating and is discharged via the bypass line 420 may be more effectively used, thereby greatly improving the energy utilization efficiency of the fuel cell system 1 according to an embodiment of the inventive concept.

According to an embodiment of the inventive concept, the fuel cell system 1 may further include a control device (not shown). The control device controls the damper unit 430 based on a state of the supplied fuel.

Since the control device may control the damper unit 430 based on the state of the supplied fuel, the amount of the product passing through the bypass line 420 is controlled according to the state of the supplied fuel, thereby controlling preheating conditions of the preheating device 100. For example, when a supply rate of the fuel is low, the control device may close the damper unit 430 to minimize the amount of the product passing through the bypass line 420, thereby optimizing a preheating temperature of the preheating device 100. When the amounts of the fuel and air supplied in a normal driving mode are high, the degree of opening the damper unit 430 may be appropriately controlled to appropriately maintain the flow rate of the amount of the product passing through the bypass line 420.

According to an embodiment of the inventive concept, the fuel cell system 1 may further include a supply device. The supply device may include a first supply line 510 for supplying a fuel and water to the fuel cell stack module 300 via the preheating device 100 and the preliminary reforming device 200, and a second supply line 520 for supplying air to the fuel cell stack module 300.

The supply device may supply a fuel, an oxidizer, etc. which will react in the fuel cell stack module 300. The supply device includes the first supply line 510 and the second supply line 520, a fuel and water may be supplied via the first supply line 510 and an oxidizer may be supplied via the second supply line 520. The fuel and the water supplied via the first supply line 510 may pass through the preheating device 100 and the preliminary reforming device 200 and then be reformed to an appropriate state to react in the fuel cell stack module 300. The oxidizer supplied via the second supply line 520 may be, for example, air but it not limited thereto.

While the inventive concept has been particularly shown and described with reference to exemplary embodiments thereof, it will be understood that various changes in form and details may be made therein without departing from the spirit and scope of the following claims.

## Claims

1. A power generation system comprising:
a preheating device for preheating a fuel;
a preliminary reforming device for reforming the preheated fuel;
a fuel cell stack module in which the reformed fuel reacts to generate electric power; and
a circulating device for selectively providing a product generated in the fuel cell stack module to the preheating device.

2. The fuel cell system of claim 1, wherein the circulating device comprising:
a heating line for supplying the product to the preheating device; and
a bypass line for diverting the product from the preheating device.

3. The fuel cell system of claim 2, wherein the bypass line comprises:
a flow meter for controlling a flow rate; and
a damper unit.

4. The fuel cell system of claim 2, wherein the bypass line comprises a heat exchanger.

5. The fuel cell system of claim 1, further comprising a control device, wherein the control device controls the damper unit according to a state of a supplied fuel.

6. The fuel cell system of claim 1, further comprising a supply device, wherein the supply device comprises:
a first supply line for supplying a fuel and water to the fuel cell stack module via the preheating device and the preliminary reforming device; and
a second supply line for supplying air to the fuel cell stack module.

7. The fuel cell system of claim 1, wherein the fuel cell stack module comprises:
an anode;
a cathode; and
an electrolyte between the anode and the cathode.
